# EUROPÄISCHE PATENTSCHRIFT

(11) **EP 2 108 501 B1**
(45) Veröffentlichungstag und Bekanntmachung des Hinweises auf die Patenterteilung: **20.02.2019**
(21) Anmeldenummer: 09157199.2
(22) Anmeldetag: 02.04.2009
(51) Int. Cl.: B29C 49/64, B29C 49/06

(54) **Verfahren und Vorrichtung zum Herstellen von Kunststoffbehältnissen**
Device and method for manufacturing plastic containers
Procédé et dispositif de fabrication de récipients en matière plastique

(30) Priorität: 08.04.2008 DE 102008017759
(43) Veröffentlichungstag der Anmeldung: 14.10.2009
(73) Patentinhaber: Krones AG, 93073 Neutraubling (DE)
(72) Erfinder: Forsthövel, Jochen, 93073 Neutraubling (DE)
(74) Vertreter: Bittner, Bernhard

(56) Entgegenhaltungen:
- EP-A1- 1 529 621
- DE-A1-102006 015 475
- DE-A1-102007 022 386
- US-A- 3 434 702

## Beschreibung

Die vorliegende Erfindung bezieht sich auf ein Verfahren und eine Vorrichtung zum Herstellen von Kunststoffbehältnissen. Aus dem Stand der Technik sind derartige Verfahren und Vorrichtungen bekannt. Dabei ist es ebenfalls bekannt, zunächst Vorformlinge entlang einer Heizstrecke zu erwärmen und anschließend die erwärmten Vorformlinge mit Hilfe einer Blaseinrichtung zu expandieren. Dabei weisen die Vorformlinge bereits die fertig hergestellten Mündungen auf, welche möglichst nicht erwärmt werden sollten, um Verformungen zur Mündung hin zu vermeiden. Daher ist es aus dem Stand der Technik bekannt, dass die Vorformlinge während des Transports durch die Heizeinrichtung derart transportiert werden, dass die Mundstücke selbst nicht oder nur kaum erwärmt werden. Dies kann beispielsweise durch Abschirmelemente erreicht werden. Derartige Vorformlinge bestehen in der Regel aus einem Mundstück, einem Tragring, einen Konusbereich und einen darunterliegenden Körper und Boden. Wie ausgeführt, soll das Mundstück möglichst kalt bleiben um Deformationen zu verhindern. Die Wanddicke ist hier in der Regel relativ gering.

Der erwähnte Konusbereich des Vorformlings beginnt unter dem Mundstück und weist ebenfalls eine relativ geringe Wanddicke auf, um dann an den Körper des Vorformlings mit hoher Körperwanddicke anzuschließen. Insbesondere dieser unterhalb des Konus liegende Körperbereich muss aufgeheizt werden, um das Material unter dem Tragring durch Verstreckung für den Flaschenkörper nutzen zu können. Dies ist insbesondere relevant für den direkt unter dem Tragring liegende Bereich und insbesondere bei leichten Flaschen erforderlich. Die Wanddicke des Vorformlings in diesem kritischen Bereich ist direkt unter dem Tragring in der Regel relativ gering. Andererseits stellt die Wanddicke des Vorformlings im Bereich des Körpers die größte Wanddicke des Vorformlings dar und benötigt daher die längste Zeit für die Erwärmung. Im Bereich des Bodens liegt üblicherweise eine etwas geringere Wanddicke vor, dieser Bereich muss jedoch ebenfalls ausreichend erwärmt werden. DE102006015475 A1 offenbart ein Verfahren und eine Vorrichtung gemäß den Oberbegriffen der Ansprüche 1 und 7. Der vorliegenden Erfindung liegt daher die Aufgabe zugrunde, den Heizvorgang derartiger Vorformlinge zu verbessern und insbesondere eine individuellere Behandlung des unter dem Tragring liegenden Bereichs des Vorformlings zu erreichen. Dies wird erfindungsgemäß durch ein Verfahren nach Anspruch 1 und eine Vorrichtung nach Anspruch 7 erreicht. Vorteilhafte Ausführungsformen und Weiterbildungen sind Gegenstand der Unteransprüche.

Bei einem Verfahren zum Herstellen von Kunststoffbehältnissen werden die Kunststoffvorformlinge mittels einer Heizvorrichtung erwärmt und anschließend in einer Blasvorrichtung zu Kunststoffbehältnissen expandiert. Dabei werden unterschiedliche Bereiche des Vorformlings in der Längsrichtung des Vorformlings unterschiedlich erwärmt. Die Größe wenigstens eines Bereichs in der Längsrichtung des Vorformlings wird während der Erwärmung in der Heizvorrichtung geändert. Unter einer unterschiedlichen Erwärmung wird insbesondere verstanden, dass die Endtemperatur nach dem Erwärmungsvorgang in diesen genannten Bereichen unterschiedlich ist. Die Änderung der Größe eines Bereiches zieht dabei bevorzugt auch die Änderung des jeweiligen anderen Bereichs nach sich. Es ist jedoch auch möglich, dass sich die Größe eines Bereichs ändert, die des anderen Bereichs jedoch konstant bleibt. Dies könnte etwa dadurch erreicht werden, dass entlang der Heizstrecke in der Längsrichtung der Vorformlinge unterschiedliche Heizelemente zu- bzw. abgeschaltet werden.
Unter einer Änderung des Bereiches während der Erwärmung wird insbesondere der zeitliche Bereich verstanden, in dem die Kunststoffvorformlinge mit einer Transporteinrichtung durch die Heizvorrichtung transportiert werden und besonders bevorzugt derjenige Bereich, der zwischen der Übernahme des Vorformlings durch die Transporteinrichtung und der Übergabe des Vorformlings von der Transporteinrichtung an eine Übergabeeinrichtung dient. Üblicherweise weisen derartige Vorrichtungen mehrere Transportsterne auf, welche sowohl die Vorformlinge an die Transportvorrichtung übergeben als auch nach dem Heizvorgang von der Transporteinrichtung übernehmen.
Damit wird insbesondere vorgeschlagen, während des Heizvorgangs zwei unterschiedliche Positionen des Vorformlings in dessen Längsrichtung zu verwenden.

Ein Bereich des Vorformlings wird während der Erwärmung des Vorformlings durch eine Abschirmeinrichtung gegenüber der Erwärmung abgeschirmt und die Position dieser Abschirmeinrichtung gegenüber dem Vorformling ändert sich in der Längsrichtung des Vorformlings während der Erwärmung des Vorformlings in der Heizvorrichtung. Die Änderung der Position der Abschirmeinrichtung gegenüber dem Vorformling kann dabei durch ein Verstellen bzw. Verschieben des Vorformlings in dessen Längsrichtung, durch ein Verstellen bzw. Verschieben der Abschirmeinrichtung oder durch eine Kombination dieser beiden Bewegungen erreicht werden.

Weiterhin wäre es auch möglich, beispielsweise die Dicke der Abschirmeinrichtung der Längsrichtung des Vorformlings zu ändern, beispielsweise die Abschirmeinrichtung in Form mehrerer übereinander angeordneter Platten vorzusehen, wobei sich die Gesamtdicke dieser Abschirmeinrichtung während des Erwärmungsvorgangs ändert.

Die Abschirmeinrichtung dient, wie oben erwähnt, in erster Linie dazu, um den Bereich oberhalb des Tragrings, d. h. den Mündungsbereich des Vorformlings abzuschirmen so das dieser möglichst wenig erwärmt wird.

Bei einer weiteren vorteilhaften Ausführungsform ändert sich die Größe des genannten Bereichs stufenweise. Darunter wird verstanden, dass sie während des Erwärmungsprozesses zunächst konstant ist, sich anschließend in einen Übergangsbereich ändert und anschließend wiederum konstant ist. Es wäre jedoch auch möglich, dass sich die Größe des Bereichs entlang des gesamten Transportpfads oder einem Teilbereich desselben kontinuierlich verändert.

Bei einer weiteren vorteilhaften Ausführungsform enthält der erste Bereich die Mündung des Behältnisses. Dieser Bereich wird während des Erwärmungsvorgangs vergrößert. Dies bedeutet, dass am Anfang des Erwärmungsprozesses nicht nur der Bereich der Mündung abgeschirmt wird, sondern auch ein vorgegebener darunter liegender Bereich des Vorformlings. Auf diese Weise wird erreicht, dass ein Großteil des Aufheizprozesses mit einer sicheren Abschirmung des Mundstückes bzw. der Mündung stattfindet und in diesem Bereich auch noch ein Bereich unterhalb des Tragrings abgeschirmt wird. Dabei ist es möglich, den Vorformling weit in eine Abschirmeinrichtung, wie beispielsweise in eine Abschirmplatte, einzuführen. In diesem Bereich wird also der relativ dickwandige Körper des Vorformlings gut durchgeheizt und gleichzeitig die Mündung noch geschont. Auf Grund der geringeren Wanddicken unterhalb des Tragrings benötigt man in diesem Bereich weniger Aufheizzeit.

Damit wird bevorzugt die Abschirmeinrichtung gegenüber dem Vorformling im Laufe des Erwärmungsprozesses nach oben verschoben. In einem zweiten Abschnitt der Heizvorrichtung wird die Position des Vorformlings derart gewählt, dass auch dieser Konusbereich des Vorformlings bis direkt unter den Tragring aufgeheizt wird. Durch dieses Verfahren wird die Aufheizung der Mündung bei Beibehaltung einer guten Trennschärfe zwischen einem relativ kalten Tragring und einer relativ heißen Vorformlingwandung darunter minimiert. Weiterhin ist es auch möglich, durch diese Vorgehensweise die Temperatur eines Dorns, der bevorzugt in die Mündung der Vorformlinge eingreift, abzusenken.

Bei einem weiteren vorteilhaften Verfahren wird die Position der Vorformlinge während des Erwärmungsvorgangs in der Längsrichtung der Vorformlinge verändert. Dies bedeutet, dass die Position der Abschirmeinrichtung konstant bleibt und sich ihr gegenüber die Position der Vorformlinge verändert.

Bei einem weiteren vorteilhaften Verfahren wird die Größe des Bereichs in einer zweiten Hälfte des Transportpfades, entlang dessen die Behältnisse durch die Heizvorrichtung geführt werden, geändert. Damit ist ein zweiter Abschnitt dieses Transportpfades vorteilhaft kürzer und maximal in einer Größe wie der erste Bereich. Vorteilhaft wird nach der oben beschriebenen Änderung des Bereichs lediglich ein Bereich oberhalb des Tragrings des Vorformlings abgeschirmt.
Die vorliegende Erfindung ist weiterhin auf eine Vorrichtung zum Erwärmen von Vorformlingen zur Herstellung von Kunstsoffbehältnissen gemäß Anspruch 7 gerichtet.

Die Vorrichtung weist eine Abschirmeinrichtung auf, welche einen ersten Bereich des Vorformlings gegenüber einer Erwärmung durch die Vorrichtung bzw. der Heizstrecke gegenüber einer Erwärmung wenigstens teilweise abschirmt. Vorzugsweise ist die Vorrichtung derart gestaltet, dass eine Relativposition der Vorformlinge gegenüber der Abschirmeinrichtung während des Transports der Vorformlinge in Transportrichtung wenigstens einmal verändert wird.
Damit wird auch bei der erfindungsgemäßen Vorrichtung vorgeschlagen, die Bereiche, in denen der Vorformling erwärmt wird, zu verändern.
Es wird darauf hingewiesen, dass bei dieser letztgenannten Ausgestaltung die Relativposition der Vorformlinge geändert wird. Es wäre jedoch auch möglich, entlang der Heizstrecke eine Vielzahl von in Längsrichtung der Vorformlinge übereinander angeordneter Heizeinrichtungen vorzusehen, welche für die Erreichung unterschiedlicher Heizeffekte unterschiedlich zu- bzw. abgeschalten werden können um auf diese Weise während des Heizvorgangs unterschiedliche Bereiche des Behältnisses unterschiedlich zu erwärmen und um diese Bereiche auch zu verändern.

Bei einer vorteilhaften Ausführungsform weist die Vorrichtung eine Übergabeeinrichtung auf, welche die Vorformlinge an die Transporteinrichtung übergibt sowie eine Übernahmeeinrichtung, welche die Vorformlinge von der Transporteinrichtung übernimmt, wobei die Vorrichtung derart gestaltet ist, dass die Relativposition der Vorformlinge gegenüber der Abschirmeinrichtung nach der Übergabe durch die Übergabeeinrichtung und vor der Übernahme durch die Übernahmeeinrichtung wenigstens einmal verändert wird.

Bei einer weiteren vorteilhaften Ausführungsform weist die Transporteinrichtung einen Dorn auf, der während des Transports der Vorformlinge in eine Mündung der Vorformlinge eingreift. Dieser Dorn wird dabei wiederum gemeinsam mit dem an ihm angeordneten Vorformling durch die Heizstrecke gefördert.

Bei einer weiteren vorteilhaften Ausführungsform weist die Vorrichtung eine Verstelleinrichtung auf, welche eine Relativposition der Vorformlinge verstellt. Genauer wird bei dieser Ausführungsform eine Relativposition des Dorns in der Längsrichtung der Vorformlinge verändert und damit auch die Vorformlinge in ihrer Längsrichtung verschoben.

Vorzugsweise weist die Verstelleinrichtung ein pneumatisches Verstellelement auf. Es wären jedoch auch andere Verstellelemente möglich, wie beispielsweise magnetische Verstellelemente, hydraulische Verstellelemente, oberhalb des Dorns angeordnete Verstellschienen und dergleichen.
Vorteilhaft umgibt die Abschirmeinrichtung den Vorformling in dessen Umfangsrichtung vollständig. Dabei ist es möglich, die Abschirmeinrichtung als Platte auszuführen, welche eine vorzugsweise kreisrunde Öffnung aufweist, durch welche der Vorformling durchführbar ist.
Vorzugsweise weist die Abschirmeinrichtung in der Längsrichtung der Vorformlinge eine Dicke auf, die kleiner ist als die Länge der Mündung der Vorformlinge. Vorzugsweise ist die Dicke nur geringfügig kleiner als die besagte Länge der Mündung der Vorformlinge und besonders bevorzugt liegt sie in einem Bereich zwischen dem 0,8-fachen und dem 1,2-fachen und besonders bevorzugt zwischen dem 0,8-fachen und dem 1,0-fachen der Länge der Mündung der Vorformlinge.

Weitere Vorteile und Ausführungsformen ergeben sich aus den beigefügten Zeichnungen:
Darin zeigen:
- Fig. 1: eine Vorrichtung zum Herstellen von Kunststoffbehältnissen;
- Fig. 2: eine erste Position der Erwärmung der Vorformlinge;
- Fig. 3: eine zweite Position bei der Erwärmung der Vorformling.

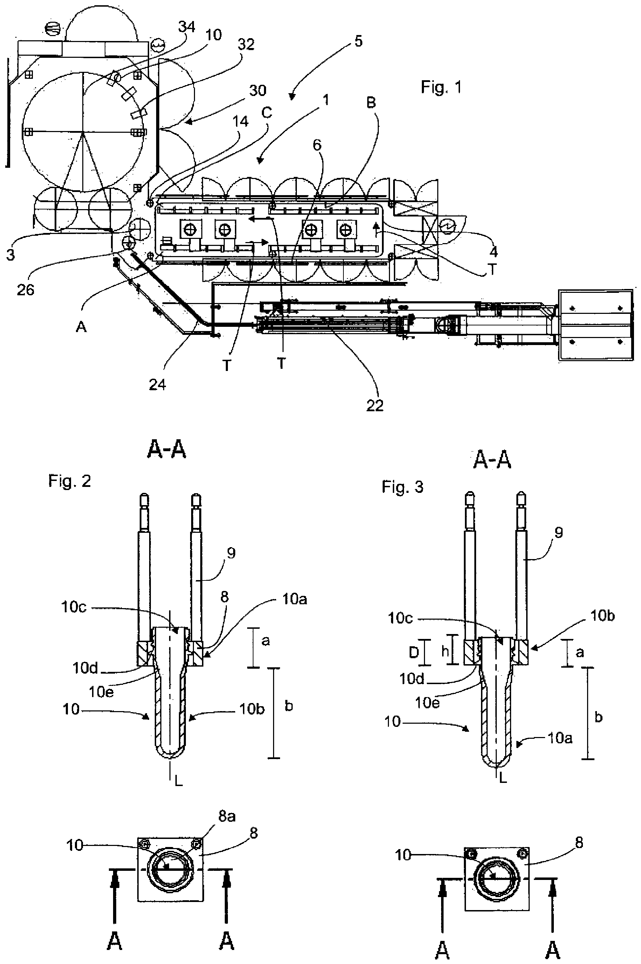

Fig. 1 zeigt eine Vorrichtung 5 zum Herstellen von Kunststoffbehältnissen. Diese Vorrichtung weist Zuführeinrichtungen 22, 24 auf, welche nur schematisch dargestellte Vorformlinge 10 einer Heizvorrichtung 1 zuführen. Dabei ist ein Eintaktrad 26 vorgesehen, welches die Vorformlinge vereinzelt und auch vereinzelt einer Transportvorrichtung 4, die ebenfalls nur schematisch dargestellt ist, zuführt. Das Bezugszeichen 3 bezieht sich auf eine Übergabeeinrichtung, welche die Vorformlinge vereinzelt an die Transporteinrichtung 4 übergibt. An die Transporteinrichtung 4 schließt sich eine Übernahmeeinrichtung 14, beispielsweise wieder in Form eines Transportsterns an, welche die erwärmten Behältnisse übernimmt und an eine Blaseinrichtung 30 übergibt. Diese Blaseinrichtung 30 weist eine Vielzahl von Blasstationen 32 auf, die an einem Transportrad 34 angeordnet sind. In diesen Blasstationen 32 werden die erwärmten Vorformlinge zu Behältnissen expandiert.
Das Bezugszeichen A bezieht sich auf den Beginn der Heizstrecke, entlang derer die Behältnisse durch eine Vielzahl von Heizeinrichtungen 6, die entlang der Transportstrecke bzw. des Transportpfades T der Transporteinrichtung 4 angeordnet sind. Die Behältnisse werden mit der Transporteinrichtung 4 zwischen dem Punkt A und dem Punkt C gefördert und zwischen den Punkten A und C liegt damit auch die Erwärmungsstrecke, entlang derer sich die Größe eines Bereichs der Vorformlinge 10 in der Längsrichtung des Vorformlings ändert.
Das Bezugszeichen B kennzeichnet einen Punkt bzw. auch einen Abschnitt entlang des Transportpfads T der Behältnisse, in dem die Größe des Bereichs in der Längsrichtung des Vorformlings geändert wird bzw. die Vorformlinge in ihrer Längsrichtung gegenüber den Abschirmeinrichtungen 8 verschoben werden. Dieser Punkt B liegt dabei bevorzugt in einer zweiten Hälfte entlang des Transportpfades T der Behältnisse. Vorzugsweise ist der Punkt B gegenüber dem Transportpfad bzw. der Transporteinrichtung verstellbar, um auf diese Weise die Erwärmung der Vorformlinge während des Transports durch die Heizvorrichtung 1 zu ändern.

Fig. 2 zeigt eine erste Darstellung der Erwärmung der Behältnisse 10. Die Behältnisse 10 weisen dabei einen ersten bzw. oberen Bereich 10a und einen zweiten bzw. unteren Bereiche 10b auf. Der erste obere Bereich 10a weist dabei eine Länge a und der zweite Bereich 10b eine Länge b auf (gemessen jeweils in der Längsrichtung L des Vorformlings 10).

Während des Transports der Vorformlinge mit der in Fig. 1 gezeigten Transporteinrichtung 4 wird zwischen den Punkten A und B lediglich der zweite Bereich 10b des Vorformlings 10 erwärmt. Der Bereich einer Mündung 10c des Vorformlings und auch der direkt unterhalb eines Tragrings 10d des Behältnis liegende Bereich des Vorformlings werden hingegen nicht erwärmt. Man erkennt, dass in diesen Übergangsbereich unterhalb des Tragrings 10d, der mit dem Bezugszeichen 10e gekennzeichnet ist, die Wandungsdicke des Vorformlings relativ gering ist, insbesondere geringer als in dem Bereich 10b.

Das Bezugszeichen 8 bezieht sich auf eine Abschirmeinrichtung, welche den besagten Bereich 10e sowie die Mündung 10b des Vorformlings abschirmt. Diese Abschirmeinrichtung 8 wird dabei an einem Träger 9 gehalten. Die untere Teildarstellung in Fig. 2 zeigt eine Draufsicht auf das Behältnis 10, welches in eine Öffnung 8a der Abschirmeinrichtung 8 angeordnet ist.

Fig. 3 zeigt die Erwärmung der Vorformlinge 10 im zweiten Abschnitt der Transporteinrichtung d.h. nach dem Punkt B. Man erkennt, dass hier die Relativposition des Vorformlings 10 gegenüber der Abschirmeinrichtung 8 verändert wurde und in dieser Position auch in dem Bereich direkt unterhalb des Tragrings 10d für eine Erwärmung freigegeben ist. Entsprechend erkennt man auch, dass die Länge a des oberen Bereichs 10a kürzer geworden ist und umgekehrt die Länge b des zweiten Bereichs 10b länger geworden ist. Um dies zu erreichen wird vorzugsweise die Position der Abschirmeinrichtung 8 in der Längsrichtung L konstant gehalten und dieser gegenüber die Position des Vorformlings 10 in der Längsrichtung L nach unten verschoben. Auf diese Weise wird erreicht, dass der Bereich unterhalb des Tragrings in einem wesentlich kürzeren Abschnitt erwärmt wird als der übrige Bereich 10b des Vorformlings. Die Abschirmeinrichtung 8 ist, wie auch im unteren Teilbild erkennbar, als Platte ausgeführt, welche eine Dicke D aufweist. Diese Dicke der Platte ist dabei an eine Höhe h der Mündung 10c des Vorformlings angepasst und liegt bevorzugt in einem Bereich zwischen dem 0,8-fachen dieser Höhe und dem 1,2-fachen dieser Höhe. Die Transporteinrichtung kann beispielsweise als Transportkette ausgeführt sein, an der eine Vielzahl von Dornen angeordnet ist, welche in die Mündungen der Vorformlinge eingreifen. Vorteilhaft ist an jedem dieser Dorne auch eine Abschirmeinrichtung 8 angeordnet.

## Patentansprüche

1. Verfahren zum Herstellen von Kunststoffbehältnissen, wobei die Kunststoffvorformlinge mittels einer Heizvorrichtung (1) erwärmt und anschließend in einer Blasvorrichtung zu den Kunststoffbehältnissen expandiert werden und wobei unterschiedliche Bereiche (10a, 10b) des Vorformlings (10) in der Längsrichtung (L) des Behältnisses (10) unterschiedlich erwärmt werden, **dadurch gekennzeichnet, dass** ein Bereich (10a, 10b) des Vorformlings (10) während der Erwärmung des Vorformlings (10) durch eine Abschirmeinrichtung (8) gegenüber der Erwärmung abgeschirmt wird und sich die Größe wenigstens eines zu erwärmenden Bereichs (10a, 10b) in der Längsrichtung (L) des Vorformlings (10) während der Erwärmung des Vorformlings (10) in der Heizvorrichtung (1) durch eine Änderung der Position der Abschirmeinrichtung (8) gegenüber dem Vorformling (10) während der Erwärmung des Vorformlings (10) in der Heizvorrichtung (1) ändert.

2. Verfahren nach Anspruch 1, **dadurch gekennzeichnet, dass** sich die Größe (a, b) des Bereichs (10a, 10b) stufenweise ändert.

3. Verfahren nach wenigstens einem der vorangegangenen Ansprüche, **dadurch gekennzeichnet, dass** der erste Bereich (10a) die Mündung (10c) des Behältnisses (10) enthält und dieser Bereich (10a) während des Erwärmungsvorgangs vergrößert wird.

4. Verfahren nach wenigstens einem der vorangegangenen Ansprüche 1 - 3, **dadurch gekennzeichnet, dass** die Position der Vorformlinge (10) während des Erwärmungsvorgangs in der Längsrichtung (L) der Vorformlinge (10) verändert wird.

5. Verfahren nach wenigstens einem der vorangegangenen Ansprüche, **dadurch gekennzeichnet, dass** die Größe des Bereichs (10a, 10b) in einer zweiten Hälfte des Transportpfades, entlang dessen die Behältnisse durch die Transporteinrichtung (4) geführt werden, geändert wird.

6. Verfahren nach wenigstens einem der vorangegangenen Ansprüche, **dadurch gekennzeichnet, dass** nach der Änderung des Bereichs (10a) lediglich ein Bereich (10c) oberhalb eines Tragrings (10d) des Vorformlings abgeschirmt wird.

7. Heizvorrichtung (1) zum Erwärmen von Vorformlingen (10) zur Herstellung von Kunststoffbehältnissen mit einer Transporteinrichtung (4), durch welche die Vorformlinge (10) entlang eines vorgegebenen Pfades durch eine Heizstrecke transportierbar sind, **dadurch gekennzeichnet, dass** die Vorrichtung (1) eine Abschirmeinrichtung (8) aufweist, wodurch ein erster Bereich (10a) des Vorformlings (10) gegenüber einer Erwärmung wenigstens teilweise abschirmbar ist und derart gestaltet ist, dass die Größe wenigstens eines Bereichs (10a, 10b) in der Längsrichtung (L) der Vorformlinge (10) während der Erwärmung der Vorformlinge (10) in der Heizvorrichtung (1) durch eine wenigstens einmalige Änderung einer Relativposition der Vorformlinge gegenüber der Abschirmeinrichtung während der Erwärmung der Vorformlinge (10) in der Heizvorrichtung (1) änderbar ist.

8. Heizvorrichtung (1) nach Anspruch 7, **dadurch gekennzeichnet, dass** die Vorrichtung eine Übergabeeinrichtung (3) aufweist, durch welche die Vorformlinge (10) an die Transporteinrichtung (4) übergebbar sind, sowie eine Übernahmeeinrichtung (14), durch welche die Vorformlinge (10) von der Transporteinrichtung (4) übernehmbar sind, wobei die Vorrichtung (1) derart gestaltet ist, dass die Relativposition der Vorformlinge (10) gegenüber der Abschirmeinrichtung (8) nach der Übergabe durch die Übergabeeinrichtung (3) und vor der Übernahme durch die Übernahmeeinrichtung (14) wenigstens einmal veränderbar ist.

9. Heizvorrichtung (1) nach wenigstens einem der vorangegangenen Ansprüche 7 - 8, **dadurch gekennzeichnet, dass** die Transporteinrichtung (4) einen Dorn aufweist, der während des Transports der Vorformlinge in eine Mündung (10c) der Vorformlinge (10) eingreift.

10. Heizvorrichtung (1) nach wenigstens einem der vorangegangenen Ansprüche 7 - 9, **dadurch gekennzeichnet, dass** die Vorrichtung eine Verstelleinrichtung aufweist, welche eine Relativposition der Vorformlinge (10) in der Längsrichtung (L) verändert.

11. Heizvorrichtung (1) nach Anspruch 10, **dadurch gekennzeichnet, dass** die Verstelleinrichtung ein pneumatisches Verstellelement aufweist.

12. Heizvorrichtung (1) nach wenigstens einem der vorangegangenen Ansprüche 7 - 11, **dadurch gekennzeichnet, dass** die Abschirmeinrichtung (8) den Vorformling (10) in dessen Umfangsrichtung vollständig umgibt.

13. Heizvorrichtung (1) nach wenigstens einem der vorangegangenen Ansprüche 7 - 12, **dadurch gekennzeichnet, dass** die Abschirmeinrichtung (8) in der Längsrichtung (L) der Vorformlinge (10) eine Dicke (D) aufweist, die kleiner ist wie die Länge (h) der Mündung (10c) der Vorformlinge (10).

## Claims

1. Method for producing plastic containers, wherein the plastic preforms are heated by means of a heating apparatus (1) and then are expanded in a blow moulding apparatus to form the plastic containers, and wherein different regions (10a, 10b) of the preform (10) in the longitudinal direction (L) of the container (10) are heated differently, **characterised in that** during the heating of the preform (10), one region (10a, 10b) of the preform (10) is shielded from the heating by a shielding device (8) and the size of at least one region to be heated (10a, 10b) changes in the longitudinal direction (L) of the preform (10) during the heating in the heating apparatus (1) by changing the position of the shielding device (8) relative to the preform (10) during the heating of the preform (10) in the heating apparatus (1).

2. Method according to claim 1, **characterised in that** the size (a, b) of the region (10a, 10b) changes in stages.

3. Method according to at least one of the preceding claims, **characterised in that** the first region (10a) contains the mouth (10c) of the container (10) and this region (10a) is enlarged during the heating process.

4. Method according to at least one of the preceding claims 1 - 3, **characterised in that** the position of the preforms (10) is changed in the longitudinal direction (L) of the preforms (10) during the heating process.

5. Method according to at least one of the preceding claims, **characterised in that** the size of the region (10a, 10b) is changed in a second half of the transport path along which the containers are guided by the transport device (4).

6. Method according to at least one of the preceding claims, **characterised in that**, after the region (10a) has changed, only a region (10c) above a carrying ring (10d) of the preform is shielded.

7. Heating apparatus (1) for heating preforms (10) in order to produce plastic containers, comprising a transport device (4) which transports the preforms (10) along a predefined path through a heating section, **characterised in that** the apparatus (1) comprises a shielding device (8) which at least partially shields a first region (10a) of the preform (10) against heating and is configured in such a way that the size of at least one region (10a, 10b) changes in the longitudinal direction (L) of the preforms (10) during the heating of the preforms (10) in the heating apparatus (1) by at least one change in a relative position of the preforms relative to the shielding device during the heating of the preforms (10) in the heating device (1).

8. Heating apparatus (1) according to claim 7, **characterised in that** the apparatus comprises a transfer device (3) which transfers the preforms (10) to the transport device (4), and also a pick-up device (14) which picks up the preforms (10) from the transport device (4), wherein the apparatus (1) is configured in such a way that the relative position of the preforms (10) with respect to the shielding device (8) is changed at least once after transfer by the transfer device (3) and before pick-up by the pick-up device (14).

9. Heating apparatus (1) according to at least one of the preceding claims 7 - 8, **characterised in that** the transport device (4) comprises a mandrel which engages in a mouth (10c) of the preforms (10) during transport of the preforms.

10. Heating apparatus (1) according to at least one of the preceding claims 7 - 9, **characterised in that** the apparatus comprises an adjustment device which changes a relative position of the preforms (10) in the longitudinal direction (L).

11. Heating apparatus (1) according to claim 10, **characterised in that** the adjustment device comprises a pneumatic adjustment element.

12. Heating apparatus (1) according to at least one of the preceding claims 7 - 11, **characterised in that** the shielding device (8) completely surrounds the preform (10) in the circumferential direction thereof.

13. Heating apparatus (1) according to at least one of the preceding claims 7 - 12, **characterised in that** the shielding device (8) has in the longitudinal direction (L) of the preforms (10) a thickness (D) which is smaller than the length (h) of the mouth (10c) of the preforms (10).

## Revendications

1. Procédé de fabrication de récipients en matière plastique, dans lequel les préformes en matière plastique sont chauffées au moyen d'un dispositif de chauffage (1) et ensuite expansées en récipients en matière plastique dans un dispositif de soufflage et dans lequel différentes zones (10a, 10b) de la préforme (10) sont chauffées différemment dans la direction longitudinale (L) du récipient (10), **caractérisé en ce qu'**une zone (10a, 10b) de la préforme (10) est protégée du chauffage pendant le chauffage de la préforme (10) par un dispositif de blindage (8) et la taille d'au moins une zone à chauffer (10a, 10b) change dans la direction longitudinale (L) de la préforme (10) pendant le chauffage de la préforme (10) dans le dispositif de chauffage (1) par une modification de la position du dispositif de blindage (8) par rapport à la préforme (10) pendant le chauffage de la préforme (10) dans le dispositif de chauffage (1).

2. Procédé selon la revendication 1, **caractérisé en ce que** la taille (a, b) de la zone (10a, 10b) change par palier.

3. Procédé selon au moins l'une quelconque des revendications précédentes, **caractérisé en ce que** la première zone (10a) contient l'embouchure (10c) du récipient (10) et cette zone (10a) s'agrandit pendant l'opération de chauffage.

4. Procédé selon au moins l'une quelconque des revendications précédentes 1-3, **caractérisé en ce que** la position des préformes (10) est modifiée pendant l'opération de chauffage dans la direction longitudinale (L) des préformes (10).

5. Procédé selon au moins l'une quelconque des revendications précédentes, **caractérisé en ce que** la taille de la zone (10a, 10b) est modifiée dans une deuxième moitié du chemin de transport, le long duquel les récipients sont guidés par le dispositif de transport (4).

6. Procédé selon au moins l'une quelconque des revendications précédentes, **caractérisé en ce qu'**après la modification de la zone (10a), seule une zone (10c) au-dessus d'un anneau porteur (10d) de la préforme est protégée.

7. Dispositif de chauffage (1) pour le chauffage de préformes (10) pour la fabrication de récipients en matière plastique avec un dispositif de transport (4), par lequel les préformes (10) peuvent être transportées le long d'un chemin prédéfini à travers un parcours de chauffage, **caractérisé en ce que** le dispositif (1) présente un dispositif de blindage (8), moyennant quoi une première zone (10a) de la préforme (10) peut être protégée au moins en partie d'un chauffage et est conçue de sorte que la taille d'au moins une zone (10a, 10b) peut être modifiée dans la direction longitudinale (L) des préformes (10) pendant le chauffage des préformes (10) dans le dispositif de chauffage (1) par une modification au moins unique d'une position relative des préformes par rapport au dispositif de blindage pendant le chauffage des préformes (10) dans le dispositif de chauffage (1).

8. Dispositif de chauffage (1) selon la revendication 7, **caractérisé en ce que** le dispositif présente un dispositif de transfert (3), par lequel les préformes (10) peuvent être transférées au dispositif de transport (4), ainsi qu'un dispositif de prise en charge (14), par lequel les préformes (10) peuvent être prises en charge par le dispositif de transport (4), dans lequel le dispositif (1) est conçu de sorte que la position relative des préformes (10) par rapport au dispositif de blindage (8) peut être modifiée au moins une fois après le transfert par le dispositif de transfert (3) et avant la prise en charge par le dispositif de prise en charge (14).

9. Dispositif de chauffage (1) selon au moins l'une quelconque des revendications précédentes 7-8, **caractérisé en ce que** le dispositif de transport (4) présente un mandrin, qui vient en prise avec une embouchure (10c) des préformes (10) pendant le transport des préformes.

10. Dispositif de chauffage (1) selon au moins l'une quelconque des revendications précédentes 7-9, **caractérisé en ce que** le dispositif présente un dispositif de réglage, lequel modifie une position relative des préformes (10) dans la direction longitudinale (L).

11. Dispositif de chauffage (1) selon la revendication 10, **caractérisé en ce que** le dispositif de réglage présente un dispositif de réglage pneumatique.

12. Dispositif de chauffage (1) selon au moins l'une quelconque des revendications précédentes 7-11, **caractérisé en ce que** le dispositif de blindage (8) entoure complètement la préforme (10) dans sa direction circonférentielle.

13. Dispositif de chauffage (1) selon au moins l'une quelconque des revendications précédentes 7-12, **caractérisé en ce que** le dispositif de blindage (8) présente dans la direction longitudinale (L) des préformes (10), une épaisseur (D) qui est inférieure à la longueur (h) de l'embouchure (10c) des préformes (10).
